# EUROPEAN PATENT SPECIFICATION

(11) **EP 1 835 333 B1**
(45) Date of publication and mention of the grant of the patent: **25.02.2009**
(21) Application number: 05820077.5
(22) Date of filing: 20.12.2005
(51) Int. Cl.: G02F 1/1339, C08F 299/02, C08G 59/54

(54) **LIQUID CRYSTAL SEALING MATERIAL AND LIQUID CRYSTAL DISPLAY CELLS MADE BY USING THE SAME**
FLÜSSIGKRISTALL-DICHTMATERIAL UND UNTER VERWENDUNG DES MATERIALS HERGESTELLTE FLÜSSIGKRISTALL-DISPLAY-ZELLEN
MATERIAU D´ETANCHEITE POUR CRISTAUX LIQUIDES ET CELLULES D´AFFICHAGE A CRISTAUX LIQUIDES UTILISANT LEDIT MATERIAU

(30) Priority: 06.01.2005 JP 2005001833
(43) Date of publication of application: 19.09.2007
(73) Proprietor: NIPPON KAYAKU KABUSHIKI KAISHA, Tokyo 102-8172 (JP)
(72) Inventor: IMAIZUMI, Masahiro, Tokyo 1150052 (JP); KUDOU, Masaru, Saitama-shi, Saitama 3370017 (JP); OHTA, Makoto, Sanyoonoda-shi, Yamaguchi 7560060 (JP); OCHI, Naoyuki, Saitama-shi, Saitama 3300835 (JP); NISHIHARA, Eiichi, Tokyo 1150042 (JP); ASANO, Toyohumi, Toda-shi, Saitama 3350026 (JP); HIRANO, Masahiro, Ageo-shi, Saitama 3620001 (JP)
(74) Representative: Gille Hrabal Struck Neidlein Prop Roos
(86) International application number: PCT/JP2005/023353
(87) International publication number: WO 2006/073053

(56) References cited:
- WO-A-20/04090621
- WO-A1-20/04027502
- WO-A1-20/04104683
- JP-A- 08 073 563
- JP-A- 08 109 242
- US-A1- 2004 033 320
- US-B2- 6 692 793
- DATABASE WPI Week 200434 Thomson Scientific, London, GB; AN 2004-359123 XP002476082 -& JP 2004 037937 A (NIPPON KAYAKU KK) 5 February 2004 (2004-02-05)

## Description

### Technical Field

The present invention relates to a liquid crystal sealing material and a liquid crystal display cell utilizing the same. More particularly, the present invention relates to a liquid crystal sealing material which can be used for manufacturing a liquid crystal display cell in which a liquid crystal is sealed by dropping the liquid crystal inside a wall of the liquid crystal sealing material formed on the peripheral portion of one substrate, thereafter laminating the other substrate thereon, and curing the liquid crystal sealing material, and to a liquid crystal display cell manufactured using the same.

### Background Art

In recent years, along with demands for large-size liquid crystal display cells, a so-called liquid crystal dropping process, which has a higher productivity, has been proposed as a manufacturing method of the liquid crystal display cells (see Patent Documents 1 and 2). Specifically, a liquid crystal display cell in which a liquid crystal is sealed is manufactured by dropping the liquid crystal inside a wall of the liquid crystal sealing material formed on the peripheral portion of one substrate, thereafter laminating the other substrate thereon.

In the liquid crystal dropping process, however, the liquid crystal sealing material in an uncured state is first made in contact with the liquid crystal, with the result that there is a defective problem that, upon manufacturing the liquid crystal display cell, some components of the liquid crystal sealing material are dissolved in the liquid crystal to cause reduction in the specific resistance of the liquid crystal. Consequently, the improvement in the reliability has been further required.

With respect to a curing method of the liquid crystal sealing material after laminating the substrates in the liquid crystal dropping process, three methods including a heat-curing method, a photocuring method and a combined photo- and heat-curing method, have been proposed. The heat-curing method has problems in that liquid crystal leaks from the liquid crystal sealing material which is being cured with reduced viscosity due to expansion of the heated liquid crystal, and in that some components of the liquid crystal sealing material with the reduced viscosity are dissolved in the liquid crystal. These problems are difficult to be resolved and therefore, this technique has not been practically used.

Herein, with respect to the liquid crystal sealing material to be used in the photocuring method, two kinds of photopolymerization initiators, that is, a cation polymerizable type and a radical polymerizable type, have been proposed. With respect to the liquid crystal sealing material of the cation polymerizable type, since ions are generated upon photocuring, the ion components are eluted in the liquid crystal in a contact state when the sealant of this type is used in the liquid crystal dropping process, resulting in a problem of a reduced specific resistance in the liquid crystal. With respect to the liquid crystal sealing material of the radical polymerizable type, the curing contraction upon photocuring is great, resulting in a problem of insufficient adhesion strength. Another problem with both the photocuring methods of the cation polymerizable type and the radical polymerizable type is that since a light-shield portion in which the liquid crystal sealing material is not exposed to light is left due to a metal wiring portion of an array substrate of the liquid crystal display cell and a black matrix portion of a color filter substrate, the corresponding light-shield portion is uncured.

As described above, the heat-curing and photocuring methods have various problems, and in actual operation, the photo-heat-curing method has been adopted as the most practical technique. The photo-heat-curing method is characterized by that the liquid crystal sealing material sandwiched by substrates is irradiated with light for primary curing, and thereafter heated for secondary curing. With respect to properties required for the liquid crystal sealing material to be used for the photo-heat-curing method, it is important to prevent the liquid crystal sealing material from contaminating the liquid crystal in respective processes before and after the light irradiation as well as before and after the heat-curing processes, and it is important to make the sealant from components which hardly elute into the liquid crystal composition.

Patent Document 3 has proposed that a partially (meth)acrylated bisphenol A type epoxy resin disclosed in Patent Document 4 should be used as a main resin component for the liquid crystal sealing material for use in the liquid crystal dropping process (Patent Documents 3,4). However, although the (meth)acrylated resin has reduced solubility to the liquid crystal, the degree of the reduction is not sufficient, and it is also difficult to solve a problem of the un-reacted remaining raw epoxy resin which contaminates the liquid crystal.

As described above, the conventionally proposed photo-heat-curing type liquid crystal sealing material used in the liquid crystal dropping process is far from satisfying all the properties such as liquid crystal contamination property, adhesive strength, workable time at room temperature and low-temperature curing property.
Patent Document 1: Japanese Patent Application Laying Open (KOKAI) No. 63-179323
Patent Document 2: Japanese Patent Application Laying Open (KOKAI) No. 10-23 9694
Patent Document 3: Japanese Patent Application Laying Open (KOKAI) No. 2001-133794
Patent Document 4: Japanese Patent Application Laying Open (KOKAI) No. 5-295087

### Disclosure of the Invention

### Problems to be solved by the invention

As described above, a partially acrylated bisphenol epoxy resin has been currently and mainly used for the sealing material for the liquid crystal dropping process. However, there have been problems in that the partially acrylated bisphenol epoxy resin is easily eluted in contact with the liquid crystal or in being subjected to heat in contact with the liquid crystal, which causes the alignment failure of the liquid crystal to result in uneven display and reduction in reliability of a panel.

On the other hand, although the completely acrylated bisphenol epoxy resin is relatively hard to be eluted in liquid crystal, the degree of the reduction of the elution is not necessarily sufficient. Also, there has also been a problem in that the whole acrylated body, which has high viscosity, greatly restricts the other components which can be used in being used as the liquid crystal sealing material composition.

The present invention relates to a liquid crystal sealing material used for the liquid crystal dropping process which drops a liquid crystal inside the wall of the liquid crystal sealing material formed in the peripheral portion of one substrate, and thereafter bonds the other substrate thereto to manufacture a liquid crystal display cell. The present invention provides a liquid crystal sealing material which hardly contaminates the liquid crystal throughout the processes, has little elution of the sealing material components to the liquid crystal even in a light-shield portion, and shows excellent in workability for application to the substrate, adhesiveness and adhesive strength and curability at low temperature when applied to the substrate.

### Means to solve the problem

As the result of extensive investigations a way to solve the above-mentioned problems, the present inventors completed the present invention. The present invention uses (meta)acrylate of the epoxy resin having an extremely low compatibility to the liquid crystal composition and having a specific structure as main components to realize a liquid crystal sealing material exhibiting low possibility of the contamination and excellent adhesive property.

That is, the present invention relates to the following items (1) to (11).
(1) A liquid crystal sealing material comprising:
   (a) a resin obtained by (meth)acryloylating an epoxy resin (A) represented by formula (1);
   (b) a photopolymerization initiator; and
   (c) an inorganic filler having a mean particle diameter of 3 µm or less,
      wherein a ratio of a p,p' isomer in a bisphenol F monomer unit constituting the epoxy resin (A) accounts for 40% or more, 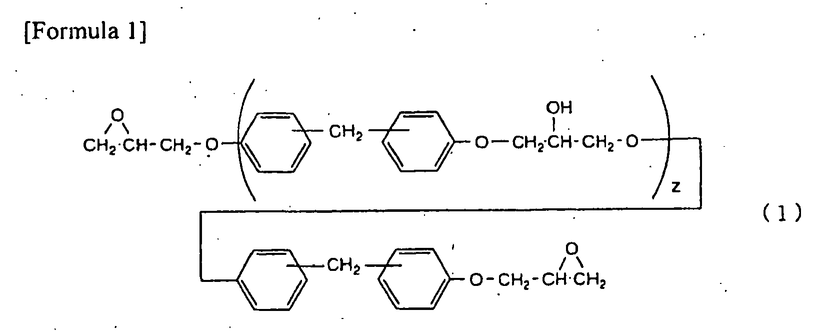 (wherein a repeating unit number z is in a range of 0 to 2.).
(2) The liquid crystal sealing material according to (1), wherein the ratio of the p, p' isomer in the bisphenol F monomer unit constituting the epoxy resin (A) is 70% or more.
(3) The liquid crystal sealing material according to (1) or (2), wherein bisphenol F other than the p, p' isomer in the bisphenol F monomer unit constituting the epoxy resin (A) is an o,o' isomer and/or an o,p' isomer.
(4) The liquid crystal sealing material according to any one of (1) to (3), wherein the epoxy resin (A) has epoxy equivalent of 300 g/eq or less.
(5) The liquid crystal sealing material according to any one of (1) to (4), wherein the weight of the resin (a) is 30 to 80% by weight of the liquid crystal sealing material.
(6) The liquid crystal sealing material according to any one of (1) to (5), wherein the photopolymerization initiator (b) is a radical photopolymerization initiator.
(7) The liquid crystal sealing material according to any one of (1) to (6), further comprising an epoxy resin (d) and a heat-curing agent (e).
(8) The liquid crystal sealing material according to (7), wherein the elution amount of the epoxy resin (d) to a liquid crystal is less than 0.5% by weight when the epoxy resin (d) is directly brought into contact with the liquid crystal whose amount is 10 times as much as the weight of the epoxy resin (d) and is allowed to stand at 120°C for 1 hour.
(9) The liquid crystal sealing material according to (7) or (8), wherein the heat-curing agent (e) is dihydrazides.
(10) A liquid crystal display cell sealed by a cured product prepared by curing the liquid crystal sealing material according to any one of (1) to (9).
(11) A process for manufacturing a liquid crystal display cell characterized by comprising adding a liquid crystal dropwise to the inside of a wall of the liquid crystal sealing material according to any one of (1) to (9) formed on one substrate, followed by laminating the other substrate thereon.

### Effects of the Invention

The liquid crystal sealing material having high adhesive strength and exhibiting a low possibility of contaminating a liquid crystal could be obtained by the present invention. The liquid crystal display cell having excellent reliability could be manufactured by using the liquid crystal sealing material of the present invention for the liquid crystal dropping process.

### Best Mode for Carrying Out the Invention

Hereinafter, the present invention will be described in detail.

A liquid crystal sealing material of the present invention is characterized by comprising a resin (a) prepared by (meth)acryloylating an epoxy resin (A) represented by formula (1) as main components. The epoxy resin represented by the formula (1) is prepared by reacting p,p'-bisphenol F with epihalohydrin according to a predetermined method. Usually, the bisphenol F is a mixture of o,o'-bisphenol F (o,o' isomer), o,p'-bisphenol F (o,p' isomer) and p,p'-bisphenol F (p,p' isomer). An epoxy resin manufactured using the mixture as starting materials is also a mixture of structural isomers (For example, RE-303P, manufactured by Nippon Kayaku Co., Ltd., o,o' isomer: 17%, o,p' isomer: 54%, p,p' isomer: 28%). On the other hand, an epoxy resin having enhanced purity of p,p' isomer is commercially available (for example, Honshu Chemical Industry Co., Ltd., p,p'-BPF: p,p'-bisphenol F, purity: 99% or more). This can be used as starting materials of the epoxy resin (A) of the formula (1). As such an epoxy resin, for example, RE-602 (manufactured by Nippon Kayaku Co., Ltd.) is commercially available. The present inventors found that a resin (a) prepared by (meth)acryloylating an epoxy resin (A) having a high ratio of p,p' isomer in a bisphenol F monomer unit constituting the epoxy resin (A) represented by the formula (1) has low elution property to a liquid crystal. In order to reduce elution components to the liquid crystal, it is effective to reduce the ratio of o,o' isomer and o,p' isomer which are the structural isomer of the p,p' isomer. Therefore, the ratio of the o,o' isomer and o,p' isomer in the bisphenol F monomer unit constituting the epoxy resin (A) of the formula (1) used as starting materials for a (meta)acrylate resin is preferably less than 60%, more preferably less than 30%, and still more preferably less than 10%. That is, the ratio of p,p' isomer in the bisphenol F monomer unit constituting the epoxy resin (A) of the formula (1) used as the starting materials for the (meta)acrylate resin is preferably 40% or more, more preferably 70% or more, and still more preferably 90% or more. Also, the epoxy equivalent of the epoxy resin (A) which is suitable for being used as main starting materials for the sealant from the viewpoint of viscosity and workability or the like is preferably 300 g/eq or less, and more preferably 200 g/eq or less. When the epoxy equivalent exceeds 300 eq/g, the viscosity of the sealant may become too high to cause problems such as difficult dispense of the sealant and worse seal shape. In order to adjust the workability, a resin which has the other (meta)acryloyl groups may be added in a range where the contamination property is ruined. However, the content of an epoxy (meta)acrylate resin (a) to the liquid crystal sealing material is preferably 30% by weight to 80% by weight, and more preferably 40% by weight to 70% by weight. When the content of the epoxy (meta)acrylate resin (a) is less than 30% by weight, the ratio of the other components which are easily eluted to the liquid crystal is increased, and thereby, liquid crystal contamination property tends to be worsened. On the other hand, when the content of the epoxy (meta)acrylate resin (a) is more than 80% by weight, curing contraction caused by optical curing tends to be increased, resulting in problems such as reduction in adhesion strength.

The resin (a) prepared by (meth)acryloylating the epoxy resin (A) represented by the formula (1) contains a resin prepared by (meth)acryloylating any epoxy groups at the both ends in the formula (1), and a partially (meta)acryloylated resin in which any epoxy group is (meth)acryloylated.

As a photopolymerization initiator (b) used for the present invention, there may be used any photopolymerization initiator such as a radical photopolymerization initiator and a cation photopolymerization initiator. However, the radical photopolymerization initiator is preferable from the viewpoint of the liquid crystal contamination property. Examples of the radical photopolymerization initiators include benzyldimethyl ketal, 1-hydroxycyclohexylphenyl ketone, diethylthioxanthone, benzophenone, 2-ethylanthraquinone, 2-hydroxy-2-methylpropiophenone, 2-methyl-[4-(methylthio)-phenyl]-2-morpholino-1-propane and 2,4,6-trimethylbenzoyldiphenylphosphine oxide. It is preferable that the radical photopolymerization initiator has sensitivity at the vicinity of i-ray (365 nm) which gives comparatively small effects on characteristics of the liquid crystal, and also has low liquid crystal contamination property. Specific examples of the initiators include 3,6-bis(2-methyl-2-morpholinopropionyl)-9-n-octylcarbazole.

Mixing ratio of the photopolymerization initiator (b) to the component (a) in the liquid crystal sealing material of the present invention is 0.01 to 10 parts by weight based on 100 parts by weight of the component (a), and particularly preferably about 0.1 to 3 parts by weight.

Examples of inorganic fillers (c) to be used in the present invention include fused silica, crystalline silica, silicon carbide, silicon nitride, boron nitride, calcium carbonate, magnesium carbonate, barium sulfate, calcium sulfate, mica, talc, clay, alumina, magnesium oxide, zirconium oxide, aluminum hydroxide, magnesium hydroxide, calcium silicate, aluminum silicate, lithium aluminum silicate, zirconium silicate, barium titanate, glass fiber, carbon fiber, molybdenum disulfide, asbestos. Preferable examples include fused silica, crystalline silica, silicon nitride, boron nitride, calcium carbonate, barium sulfate, calcium sulfate, mica, talc, clay, alumina, aluminum hydroxide, calcium silicate and aluminum silicate. More preferable examples include fused silica, crystalline silica, alumina and talc. These fillers may be used as a mixture of two kinds or more. The particle diameter of the inorganic filler is required to be sufficiently smaller than a liquid crystal cell gap. The average particle diameter is preferably 3 µm or less, and more preferably 1 µm or less. The minimum thereof is usually about 0.003 µm. Large average particle diameter thereof tends to cause a problem of defective gap formation upon bonding of upper and lower glass substrates each other when a liquid crystal cell is manufactured. Here, the average particle diameter of the inorganic filler is measured using a laser diffraction-scattering type measuring device of particle diameter distribution (dry type) (LMS-30, manufactured by Seishin Enterprise Co., Ltd.).

The content of the inorganic filler (c) used for the present invention in the liquid crystal sealing material is usually 5 to 40% by weight, and preferably 15 to 30% by weight. When the content of the filler is lower than 5% by weight, adhesive strength to a glass substrate is reduced, and moisture-resistant reliability is also inferior, thereby largely reducing the adhesive strength after moisture absorption. Also, when the content of the filler exceeds 40% by weight, the content of the filler is excessive, and thereby, the liquid crystal sealing material tends to be hardy broken to disable gap formation of the liquid crystal cell.

Into the liquid crystal sealing material of the present invention, an epoxy resin (d) and a heat-curing agent (e) may be further added. Adhesion reliability can be much improved by adding the epoxy resin (d) and the heat-curing agent (e).

The epoxy resin (d) used in the invention is not particularly limited. However, from the viewpoint of the liquid crystal contamination property, the elution amount of the epoxy resin (d) to the liquid crystal is preferably less than 0.5% by weight when the epoxy resin (d) is directly brought into contact with the liquid crystal 10 times as much in weight as the epoxy resin (d) and is left at 120°C for 1 hour. Examples of the epoxy resins include:
a bisphenol S-type epoxy resin represented by formula (2) (manufactured by Nippon Kayaku Co., Ltd., EBPS-300), 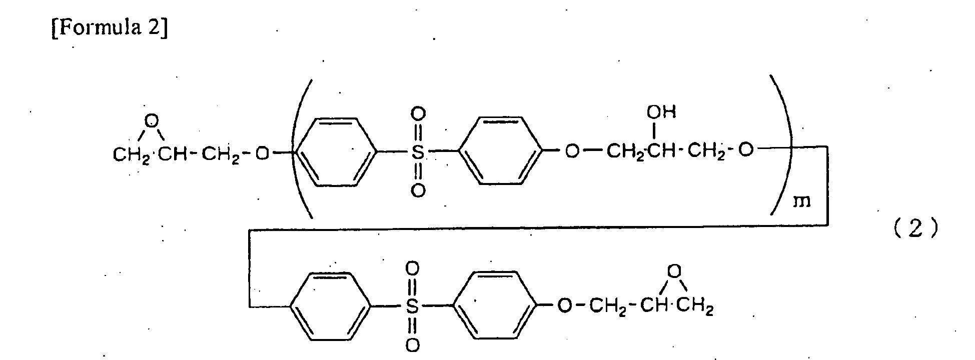 (wherein a repeating unit number m is in a range of 0 to 20.);
a resorcin diglycidyl ether polymer (manufactured by Nippon Kayaku Co., Ltd.; DRGE) represented by formula (3), 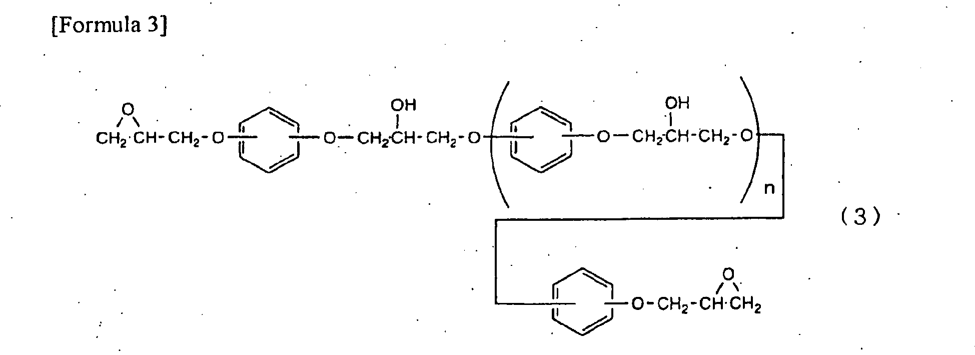 (wherein a repeating unit number n is in a range of 0 to 20.); and
diglycidyl ether of ethylene oxide adduct bisphenol S represented by formula (4) (manufactured by Nippon Kayaku Co., Ltd.; RE-203), 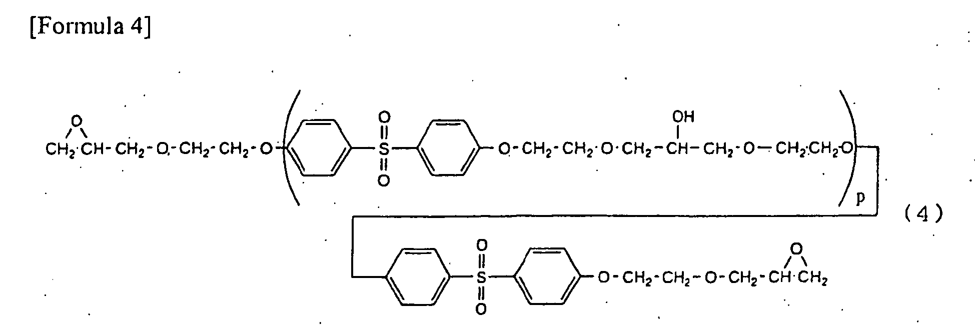 (wherein a repeating unit number p is in a range of 0 to 20.). However, the epoxy resins are not limited thereto.

The elution amount can be determined by gas chromatography using pentadecane as an internal standard substance. The amount of hydrolyzable chlorine of the epoxy resin (d) used for the present invention is 600 ppm or less, and preferably 300 ppm or less: The amount of hydrolyzable chlorine exceeding 600 ppm causes a problem of the contamination property of the liquid crystal sealing material to the liquid crystal. The amount of hydrolyzable chlorine can be quantitatively determined, for example, as follows: About 0.5 g of the epoxy resin is dissolved in 20 ml of dioxane, and after this mixture is refluxed for 30 minutes using 5 ml of 1-N KOH/ethanol solution, the resulting solution is titrated with a 0.01-N silver nitrate solution.

The content of the epoxy resin (d) occupied in the liquid crystal sealing material is preferably 5 to 70% by weight in the liquid crystal sealing material, and more preferably about 10 to 50% by weight.

The heat-curing agent (e) used in the present invention is not particularly limited as long as it is reacted with the epoxy resin to form a cured product. However, it is important that the reaction of the liquid crystal selant is initiated uniformly and quickly without contamination to the liquid crystal upon heating and that time lapse-change in viscosity is less at room temperature during use. With respect to curing condition in a liquid crystal dropping process, it is generally required for a heat-curing agent to have low temperature curing ability at 120°C for about 1 hour so as to keep degradation of characteristics of a sealed liquid crystal at the minimum. In view of the above conditions, polyfunctional dihydrazides and polyvalent phenols are particularly preferably used as a heat-curing component of the liquid crystal sealing material of the present invention.

In this case, the polyfunctional dihydrazides mean compounds having at least two hydrazide groups in the molecule. Specific examples include dihydrazides having valine hydantoin skeltone such as carbohydrazide, oxalic acid dihydrazide, malonic acid dihydrazide, succinic acid dihydrazide, adipic acid dihydrazide, adipic acid dihydrazide, pimelic acid dihydrazidesuberic acid dihydrazide, azelaic acid dihydrazide, sebacic acid dihydrazide, dodecanediodihydrazide, hexadecanediodihydrazide, maleic acid dihydrazide, fumaric acid dihydrazide, diglycolic acid dihydrazide, tartaric acid dihydrazide, malic acid dihydrazide; isophthalic acid dihydrazide, terephthalic acid dihydrazide, 2,6-naphthoic acid dihydrazide, 4,4-benzene dihydrazide, 1,4-naphthoic acid dihydrazide, 2,6-pyridine dihydrazide, 1,2,4-benzene trihydrazide, pyromellitic acid tetrahydrazide, 1,4,5,8-naphthoic acid tetrahydrazide, and 1,3-bis(hydrazinecarbonoethyl)-5-isopropylhydantoin, but are not limited thereto. When the polyfunctional hydrazides are used as a curing agent, they are preferably pulverized to fine particles and uniformly dispersed in order to use as a latent curing agent. Among the polyfunctional hydrazides, dihydrazide is preferable, and isophthalic acid dihydrazide and dihydrazides having valine hydantoin skeleton are particularly preferable from the viewpoint of the liquid crystal contamination property.

On the other hand, examples of the polyvalent phenols include bisphenol A, bisphenol F, bisphenol E and phenol novolac, but are not limited to thereto.

Too large average particle diameter of the component (e) causes a problem of defective gap formation upon bonding of upper and lower glass substrates each other when a liquid crystal cell with a narrow gap is manufactured. Therefore, the average particle diameter is preferably 3 µm or less, and more preferably 2 µm or less. Moreover, for the same reason, the maximum particle diameter is preferably 8 µm or less, and more preferably 5 µm or less. The particle diameter of the curing agent was measured using a laser diffraction-scattering type measuring device of particle diameter distribution (dry type) (LMS-30, manufactured by Seishin Enterprise Co., Ltd.). The average particle diameter is preferably prepared so that it does not become extremely small (for example, 0.1 µm or less).

In the liquid crystal sealing material of the present invention, mixing ratio of the component (e) is preferably 0.5 to 3 equivalent based on the equivalent of the epoxy group of the component (d), and more preferably 0.7 to 2 equivalent. The amount of the component (e) of less than 0.5 equivalent, which causes insufficient heat-curing reaction, may result in low adhesive force and glass transition temperature. On the other hand, the equivalent of more than 3 may cause the residue of the curing agent to reduce the adhesive force and worsen pot life.

The liquid crystal sealing material of the present invention preferably contains a silane coupling agent (f) in order to improve the adhesive strength. Examples of the silane coupling agents include 3-glycidoxypropyltrimethoxysilane, 3-glycidoxypropylmethyldimethoxysilane, 3-glycidoxypropylmethyldimethoxysilane, 2-(3,4-epoxycyclohexyl)ethyltrimethoxysilane, N-phenyl-γ-aminopropyltrimethoxysilane, N-(2-aminoethyl)3-aminopropylmethyldimethoxysilane, N-(2-aminoethyl)3-aminopropylmethyltrimethoxysilane, 3-aminopropyltriethoxysilane, 3-mercaptopropyltrimethoxysilane, vinyltrimethoxysilane, N-(2-(vinylbenzylamino)ethyl)3-aminopropyltrimethoxysilane hydrochloride, 3-methacryloxypropyltrimehoxysilane, 3-chloropropylmethyldimethoxysilane and 3-chloropropyltrimethoxysilane. Two kinds or more of these silane coupling agents may be mixed and used. Among these, in order to obtain superior adhesion strength, the silane coupling agent containing an epoxy group and an amino group is preferably used.

The content of the silane coupling agent (f) occupied in the liquid crystal sealing material is usually about 0.01 to 5% by weight in the liquid crystal sealing material.

The liquid crystal sealing material according to the present invention can further be added, as needed, with such additives as an organic filler, a pigment, a leveling agent and an antifoaming agent.

In order to obtain the liquid crystal sealing material of the present invention, the components (a), (d), (d) are first dissolved and mixed. Then, the liquid crystal sealing material of the present invention can be manufactured by adding into the mixture, predetermined amounts of the components (c), (e), as needed, antifoaming agent, leveling agent and organic filler or the like, and uniformly mixing them using a known mixer such as a three-roll mill, a sand mill and a ball mill.

A liquid crystal display cell of the present invention has the following structure: a pair of substrates, each having predetermined electrodes formed thereon, are placed in opposing positions each other at a predetermined gap, and the peripheral portion thereof is sealed with the liquid crystal sealing material of the present invention, with the liquid crystal being enclosed in the gap. The kind of the liquid crystal to be enclosed is not particularly limited. Herein, the substrates are composed of a combination of substrates made of such as glass, quartz, plastic or silicon wherein at least one has light transmitting property. The manufacturing process is, for example, as follows: After spacers (gap-controlling materials) such as glass fibers have been added to the liquid crystal sealing material of the present invention, the liquid crystal sealing material is applied onto one of the pair substrates using a dispenser or the like, and liquid crystal is then dropped inside the liquid crystal sealing material, and the other glass substrate is superposed thereon under vacuum to adjust the gap. After the gap formation, the liquid crystal sealed portion is irradiated with ultraviolet rays using an ultraviolet-ray irradiation device, so that the corresponding portion is photo-cured. The dose of ultraviolet-ray irradiation is preferably 500 to 6000 mJ/cm², and more preferably 1000 to 4000 mJ/cm². Thereafter, the liquid crystal sealed portion is cured at temperature of 90 to 130°C for one to two hours to obtain a liquid crystal display cell of the present invention. A liquid crystal cell of the present invention, thus obtained, is free from display defect caused by liquid crystal contamination, and exhibits high adhesive property and superior moisture-resistant reliability. Examples of the spacers include glass fiber, silica beads and polymer beads. The diameter of the spacers is different depending on the purposes, but usually 1 to 8 µm, and preferably 2 to 6 µm. The amount to be used is usually 0.1 to 4 parts by weight based on 100 parts by weight of the liquid crystal sealing material of the present invention, preferably 0.5 to 2 parts by weight, and more preferably 0.9 to 1.5 parts by weight.

### Examples

The present invention will be described in further detail by means of the following examples.

### Synthesis Example 1 [Epoxy Acrylate (EpoxyacrylateA) of p,p'-Bisphenol F Epoxy]

A bisphenol F epoxy resin (RE-602, manufactured by Nippon Kayaku Co., Ltd., p,p' isomer purity: 99.7%, epoxy equivalent: 164 g/eq) was dissolved in toluene. To this solution, dibutylhydroxytoluene as a polymerization inhibitor was added, and this mixed solution was heated to 60°C. Then, to the solution, acrylic acid of amount of 100% equivalent of epoxy groups was added, and the mixed solution was further heated to 80°C. To the solution, trimethyl ammonium chloride which is a reaction catalyst was added, and the mixed solution was stirred at 98°C for about 50 hours. The obtained reaction solution was washed and toluene was deprived by evaporation to obtain epoxy acrylate of bisphenol F (EpoxyacrylateA) as the object.

### Synthesis Example 2 [Epoxy Acrylate of Structural isomer Mixed Bisphenol F Epoxy] (EpoxyacrylateB)

A bisphenol F epoxy resin (RE-303P, manufactured by Nippon Kayaku Co., Ltd., p,p' isomer: 28%, o,p' isomer: 54%, o,o' isomer: 17%, epoxy equivalent: 160 g/eq) was dissolved in toluene. To this solution, dibutylhydroxytoluene as a polymerization inhibitor was added, and this mixed solution was heated to 60°C. Then, to the solution, acrylic acid of amount of 100% equivalent of epoxy groups was added, and the mixed solution was further heated to 80°C. To the solution, trimethyl ammonium chloride which is a reaction catalyst was added, and the mixed solution was stirred at 98°C for about 50 hours. The obtained reaction solution was washed and toluene was deprived by evaporation to obtain epoxy acrylate of the bisphenol F (EpoxyacrylateB) as the comparison.

### Experiment Example 1

### Test for contamination into a liquid crystal of Resin

Each of 0.1 g of epoxy acrylates obtained as a synthesis example was put in a sample tube, added with a liquid crystal (manufactured by Merck Ltd., MLC-6866-100) to directly subject the epoxy acrylate and the liquid crystal to the contact treatment. This mixture was placed in an oven at 120°C for 1 hour, and then left at room temperature for 0.5 hours. Only the liquid crystal was removed, and components eluted to the liquid crystal were then determined by gas chromatography using pentadecane as an internal standard substance. The elution amount was represented with % by weight relative to the liquid crystal in Table 1. Table 1 showed that the elution amount of EpoxyacrylateA was lower than that of that of EpoxyacrylateB

### [Table 1]

**Table 1**

| Quantitative measurement of eluted substance (ppm) | Epoxyacrylate A | Epoxyacrylate B |
|---|---|---|
| Bis F epoxy acrylate o,o' isomer | <10 | 920 |
| Bis F epoxy acrylate o,p' isomer | 20 | 980 |
| Bis F epoxy acrylate p,p' isomer | 960 | 330 |
| Total | 980 | 2230 |

### Example 1

80 parts by weight of EpoxyacrylateA of the Synthesis Example 1, 20 parts by weight of RE-203 (manufactured by Nippon Kayaku Co., Ltd., epoxy equivalent: 232 g/eq, diglycidyl ether of ethylene oxide adduct bisphenol S) serving as the epoxy resin, 1.8 parts by weight of 3,6-bis(2-methyl-2-morphorinopropionyl)-9-n-octyl carbazole (manufactured by Asahi Denka Kogyo Co., Ltd., Adeka Optmer N-1414) serving as a radical photopolymerization initiator, and 1.2 parts by weight of an amino silane coupling agent (N-β(aminoethyl)γ-aminopropyltrimethoxy silane, manufactured by Shin-Etsu Silicone Co., Ltd., KBM-603) were heated and dissolved at 90°C to obtain a resin solution. Thus obtained resin solution was cooled to room temperature, then 5 parts by weight of adipic acid dihydrazide (trade name: ADH-S; prepared by further finely grinding a material of jet-mill ground-grade manufactured by Otsuka Chemical Co., Ltd., using a jet mill; melting point: 190°C, active hydrogen equivalent: 43.5 g/eq; average particle diameter: 1.3 µm; maximum particle diameter: 5 µm), 30 parts by weight of alumina (SPC-A1, manufactured by, average particle diameter: 1.0 µm) and 7 parts by weight of core shell rubber particulates: Balaloyd EXL-2655(manufactured by Kureha Chemical Industry Co., Ltd., core layer: crosslinking polybutadiene, shell layer: methacrylic acid alkyl-styrene copolymer, average particle diameter: 200 nm) were added and kneaded to obtain a liquid crystal sealing material of the present invention. The sealant had viscosity of 300 Pa-s (25°C) (measured by an R-type viscometer, manufactured by Toki Sangyo Co., Ltd.).

### Comparative Example 1

A liquid crystal sealing material of comparative example 1 was obtained in the same manner as in example except that epoxyacrylate A of example 1 was changed to epoxyacrylateB of the synthesis example 2. The liquid crystal sealing material had viscosity of 300 Pa-s (25°C) (measured by an R-type viscometer, manufactured by Toki Sangyo Co., Ltd.).

Next, the Test for contamination into a liquid crystal, glass transition temperature and Adhesive Strength Test of the liquid crystal sealing materials of example 1 and comparative example 1 were measured.

### Test for contamination into a liquid crystal

With respect to the measurement of the specific resistance of the contact liquid crystal which is the index of the contamination property to the liquid crystal, a liquid crystal sealing material of 0.1 g was put in a sample bottle, added with 1 ml of a liquid crystal (MLC-6866-100, manufactured by Merck Ltd.) and then placed in an oven at 120°C for one hour. Then, the liquid crystal sealing material was left at room temperature for 0.5 hours. Only the liquid crystal was removed from the processed sample bottle, and components eluted to the liquid crystal were then determined by gas chromatography using pentadecane as an internal standard substance. Table 2 shows the results.

### Adhesive Strength Test

The resulting liquid crystal sealing material of 100 g was added with 1 g of 5 µm glass fiber and mixed under stirring. The resulting liquid crystal sealing material was applied onto a glass substrate of 50 mm x 50 mm, and a glass plate of 1.5 mm x 1.5 mm was bonded onto the liquid crystal sealing material, and after irradiation with ultraviolet rays of 2000 mJ/cm² by an UV irradiation device, the sample was put into an oven and held therein at 120°C for one hour so as to be cured. Shear adhesion strength of the glass plate was measured.Table 2 shows the results.

### Glass Transition Point

A thin film having a thickness of 100 µm was prepared by sandwiching the resulting liquid crystal sealing material with polyethylene terephthalate (PET) films, and after irradiation with ultraviolet rays of 2000 mJ/cm² by an UV irradiation device, the film was put into an oven and held therein at 120°C for one hour so as to be cured. After the curing process, the PET films were peeled off to prepare a sample. The glass transition temperature of the sample was measured in a tensile mode using a thermo-mechanical analyzer TMA (manufactured by ULVAC-RIKO, Inc.). Table 2 shows the results.

With respect to the property values required for the sealant such as adhesion strength and glass transition temperature, excellent numerical values are similarly acquired in both examples and comparative examples from Table 2. On the other hand, it can be said that with respect to the elution to the liquid crystal, the liquid crystal sealing material of example 1 has few elution than that of the liquid crystal sealing material of comparative example 1, and is the liquid crystal sealing material having excellent reliability with respect to liquid crystal contamination property.

### [Table 2]

**Table 2**

| Quantitative measurement of eluted substance (ppm) | Comparative example 1 | Example 1 |
|---|---|---|
| Bis F epoxy acrylate (total amount) | 450 | 200 |
| RE-203 | 50 | 50 |
| Total | 500 | 250 |
| | | |
| Glass transition temperature (°C) | 105 | 105 |
| Adhesive strength (MPa) | 75 | 75 |

## Claims

1. A liquid crystal sealing material comprising:
(a) a resin obtained by (meth)acryloylating an epoxy resin (A) represented by formula (1);
(b) a photopolymerization initiator; and
(c) an inorganic filler having a mean particle diameter of 3 µm or less as measured using a laser diffraction-scattering type measuring device of particle diameter distribution (dry type) (LMS-30),
wherein a ratio of a p,p' isomer in a bisphenol F monomer unit constituting the epoxy resin (A) accounts for 40% or more, 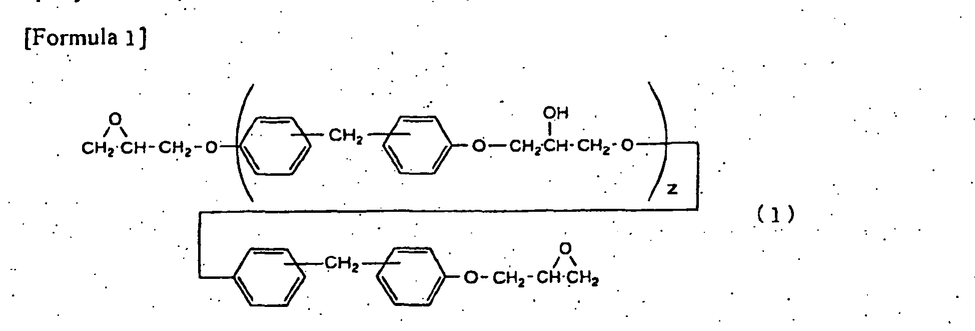 (wherein a repeating unit number z is in a range of 0 to 2.).

2. The liquid crystal sealing material according to claim 1, wherein the ratio of the p, p' isomer in the bisphenol F monomer unit constituting the epoxy resin (A) is 70% or more.

3. The liquid crystal sealing material according to claim 1 or 2, wherein bisphenol F other than the p, p' isomer in the bisphenol F monomer unit constituting the epoxy resin (A) is an o,o' isomer and/or an o,p' isomer.

4. The liquid crystal sealing material according to any one of claims 1 to 3, wherein the epoxy resin (A) has epoxy equivalent of 300 g/eq or less.

5. The liquid crystal sealing material according to any one of claims 1 to 4, wherein the weight of the resin (a) is 30 to 80% by weight of the liquid crystal sealing material.

6. The liquid crystal sealing material according to any one of claims 1, to 5, wherein the photopolymerization initiator (b) is a radical photopolymerization initiator.

7. The liquid crystal sealing material according to any one of claims 1 to 6, further comprising an epoxy resin (d) and a heat-curing agent (e).

8. The liquid crystal sealing material according to claim 7, wherein the elution amount of the epoxy resin (d) to a liquid crystal is less than 0.5% by weight when the epoxy resin (d) is directly brought into contact with the liquid crystal whose amount is 10 times as much as the weight of the epoxy resin (d) and is allowed to stand at 120°C for 1 hour.

9. The liquid crystal sealing material according to claim 7 or 8, wherein the heat-curing agent (e) is dihydrazides.

10. A liquid crystal display cell sealed by a cured product prepared by curing the liquid crystal sealing material according to any one of claims 1 to 9.

11. A process for manufacturing a liquid crystal display cell **characterized by** comprising adding a liquid crystal dropwise to the inside of a wall of the liquid crystal sealing material according to any one of claims 1 to 9 formed on one substrate, followed by laminating the other substrate thereon.

## Patentansprüche

1. Flüssigkristall-Versiegelungsmaterial, umfassend:
(a) ein durch (Meth)acryloierung eines Epoxyharzes (A), das durch Formel (1) dargestellt ist, erhaltenes Harz;
(b) einen Photopolymerisationsinitiator; und
(c) einen anorganischen Füllstoff mit einem mittleren Partikeldurchmesser von 3 µm oder weniger, gemessen unter Verwendung einer Messvorrichtung vom Laserdiffraktions-Scattering-Typ für die Partikeldurchmesserverteilung (Trockentyp) (LMS-30),
wobei der Anteils eines p,p'-Isomeren in einer Bisphenol F-Monomereinheit, die das Epoxyharz (A) bildet, 40 % oder mehr beträgt, 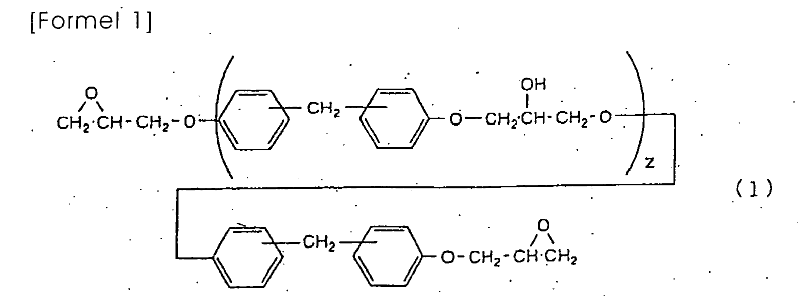 (wobei die Anzahl z der wiederkehrenden Einheiten im Bereich von 0 bis 2 liegt).

2. Flüssigkristall-Versiegelungsmaterial nach Anspruch 1 , wobei der Anteil des p,p'-Isomeren in der Bisphenol F-Monomereinheit, die das Epoxyharz (A) bildet, 70 % oder größer ist.

3. Flüssigkristall-Versiegelungsmaterial nach Anspruch 1 oder 2, wobei vom p,p'-Isomer in der das Epoxyharz (A) bildenden Bisphenol F-Monomereinheit verschiedenes Bisphenol F ein o,o'-Isomer und/oder ein o.,p'-Isomer ist.

4. Flüssigkristall-Versiegelungsmater.ial nach einem der Ansprüche 1 bis 3, wobei das Epoxyharz (A) ein Epoxyäquivalent von 300 g/Aq oder weniger aufweist.

5. Flüssigkristall-Versiegelungsmaterial nach einem der Ansprüche 1 bis 4, wobei das Gewicht des Harzes (a) 30 bis 50 Gew.-% des Flüssigkristall-Versiegelungsmaterials ist.

6. Flüssigkristall-Versiegelungsmaterial nach einem der Ansprüche 1 bis 5, wobei der Photopolymerisationsinitiator (b) ein radikalischer Photopolymerisationsinitiator ist.

7. Flüssigkristall-Versiegelungsmateriai nach einem der Ansprüche 1 bis 6, darüber hinaus umfassend ein Epoxyharz (d) und ein Wärmehärtungsmittel (e).

8. Flüssigkristall-Versiegelungsmaterial nach Anspruch 7, wobei die Elutionsmenge des Epoxyharzes (d) in einen Flüssigkristall.geringer ist als 0,5 Gew,-%, wenn das Epoxyharz (d) direkt in Kontakt mit dem Flüssigkristall gebracht wird, dessen Menge das 10-fache des Gewichts des Epoxyharzes (d) beträgt, und während einer Stunde bei 120°C stehen gelassen wird.

9. Flüssigkristall-Versiegelungsmaterial nach Anspruch 7 oder 8, wobei das Wärmehärtungsmittel (e) Dihydrazide sind.

10. Flüssigkristall-Displayzelle, versiegelt mit einem gehärteten Produkt, das durch Härtern des Flüssigkristall-Versiegelungsmaterials nach einem der Ansprüche 1 bis 9 hergestellt wurde,

11. Verfahren zur Herstellung einer Flüssigkristall-Displayzelle, **dadurch** charakterisiert, dass ein Flüssigkristall tropfenweise auf die Innenseite einer Wand aus dem Flüssigkristall-Versiegelu.ngsmaterial nach einem der Ansprüche 1 bis 9 gegeben wird, die auf einem Substrat gebildet ist, gefolgt von Laminieren des anderen Substrats darauf.

## Revendications

1. Matériau d'étanchéité pour cristaux liquides, comprenant :
(a) une résine obtenue par (méth)acryloylation d'une résine époxy (A) représentée par la formule (I) ;
(b) un initiateur de photopolymérisation ; et
(c) une charge inorganique ayant un diamètre moyen de particule égal ou inférieur à 3 µm, tel que mesuré en utilisant un dispositif de mesure du type à diffusion-diffraction de laser pour la mesure de la distribution des diamètres de particules (du type à sec) (LMS-30) ;
où la proportion d'un isomère p,p' dans un motif monomère bisphénol F entrant dans la composition de la résine époxy (A) est égale ou supérieure à 40 %, 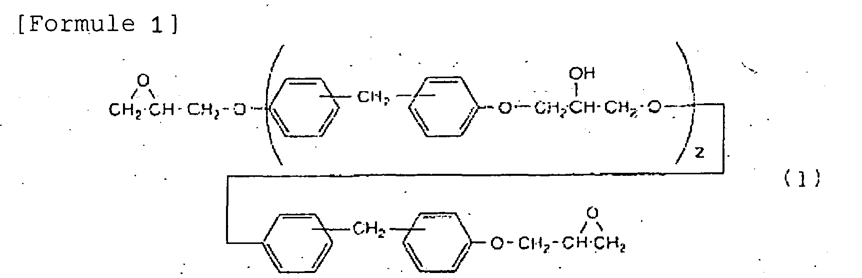 (dans laquelle le nombre z de motifs répétés va de 0 à 2).

2. Matériau d'étanchéité pour cristaux liquides suivant la revendication 1, dans lequel la proportion de l'isomère p,p' dans le motif monomère bisphénol F entrant dans la composition de la résine époxy (A) est égal ou supérieur à 70 %.

3. Matériau d'étanchéité pour cristaux liquides suivant la revendication 1 ou 2, dans lequel le bisphénol F autre que l'isomère p,p' dans le motif monomère bisphénol F entrant dans la composition de la résine époxy (A) est un isomère o,o' et/ou un isomère o/p'.

4. Matériau d'étanchéité pour cristaux liquides suivant l'une quelconque des revendications 1 à 3, dans lequel la résine époxy (A) a une valeur d'équivalent d'époxy égale ou inférieure à 300 g/eq.

5. Matériau d'étanchéité pour cristaux liquides suivant l'une quelconque des revendications 1 à 4, dans lequel le poids de la résine (a) est de 30 à 80 % en poids du matériau d'étanchéité pour cristaux liquides.

6. Matériau d'étanchéité pour cristaux liquides suivant l'une quelconque des revendications 1 à 5, dans lequel l'initiateur de photopolymérisation (b) est un initiateur de photopolymérisation radicalaire.

7. Matériau d'étanchéité pour cristaux liquides suivant l'une quelconque des revendications 1 à 6, comprenant en outre une résine époxy (d) et un photodurcisseur (e).

8. Matériau d'étanchéité pour cristaux liquides suivant la revendication 7, dans lequel la quantité éluée de résine époxy (d) à un cristal liquide est inférieure à 0,5 % en poids lorsque la résine époxy (d) est mise directement en contact avec le cristal liquide dont la quantité est égale à 10 fois le poids de la résine époxy (d) et est laissée au repos à 120°C pendant 1 heure.

9. Matériau d'étanchéité pour cristaux liquides suivant la revendication 7 ou 8, dans lequel l'agent photodurcisseur (e) consiste en dihydrazides.

10. Cellule d'affichage à cristaux liquides rendue étanche par un produit durci préparé par durcissement du matériau d'étanchéité pour cristaux liquides suivant l'une quelconque des revendications 1 à 9.

11. Procédé pour la production d'une cellule d'affichage à cristaux liquides, **caractérisé en ce qu'**il comprend l'addition d'un cristal liquide goutte à goutte à l'intérieur d'une paroi du matériau d'étanchéité pour cristaux liquides suivant l'une quelconque des revendications 1 à 9 formée sur un substrat, avec ensuite la stratification de l'autre substrat sur l'ensemble obtenu.
